# EUROPÄISCHE PATENTSCHRIFT

(11) **EP 3 489 432 B1**
(45) Veröffentlichungstag und Bekanntmachung des Hinweises auf die Patenterteilung: **15.11.2023**
(21) Anmeldenummer: 18214942.7
(22) Anmeldetag: 21.05.2005
(51) Int. Cl.: E04F 15/02, B32B 13/04, B32B 19/04, E04C 2/26, E04C 2/04

(54) **FUSSBODENBELAG MIT EINEM KERN AUS MINERALISCHEN MATERIAL**
FLOOR COVERING WITH A CORE OF MINERAL MATERIAL
REVÊTEMENT DE SOL AVEC UN NOYAU DE MATÉRIEL MINÉRAL

(30) Priorität: 14.04.2005 DE 102005017392
(43) Veröffentlichungstag der Anmeldung: 29.05.2019
(62) Teilanmeldung aus: 16191310.8
(73) Patentinhaber: Scholz, Karl-Heinz Peter, 63768 Hösbach (DE)
(72) Erfinder: Scholz, Karl-Heinz Peter, 63768 Hösbach (DE)
(74) Vertreter: Unilin Technologies

(56) Entgegenhaltungen:
- EP-A1- 1 520 947
- WO-A1-01/48332
- WO-A1-2005/031084
- DE-A1- 3 310 281
- DE-U1- 7 804 594
- DE-U1- 7 904 458

## Beschreibung

Die Erfindung betrifft einen Fußbodenbelag aus Fußbodenpaneelen mit einem plattenförmigen Kern und einer oberen Deckschicht, mit mechanischen Verriegelungsmitteln wenigstens an zwei einander gegenüberliegenden Kanten der Fußbodenpaneele.

Derartige Fußbodenpaneele sind in verschiedenen Ausführungsformen bekannt. Zum Stand der Technik kann beispielsweise auf die EP 843 763 B1 und die EP 698 162 B1 Bezug genommen werden.

Die EP 843 763 B1 beschreibt Fußbodenpaneele mit einem Kern, der auf Basis von Holz hergestellt worden ist. Als bevorzugt werden in der Druckschrift Holzwerkstoffe, insbesondere MDF und HDF genannt. Die EP 698 162 B1 offenbart ein Fußbodenpaneel, dessen Material als "kompaktes Laminat" bezeichnet wird. Als Möglichkeit für die Verbindung von zwei Paneelen wird ein Aluminiumprofil angegeben, das an jedem der Paneele befestigt werden kann und jeweils eine Verbindung zu einem angrenzenden Paneel gleicher Art ermöglicht. In jedem Fall soll die Verbindung so erfolgen, dass zwei zusammengefügte Fußbodenpaneele weder senkrecht zu ihrer Verbindungslinie auseinanderdriften noch entlang dieser Verbindungslinie verschoben werden können. Auch eine gegenseitige Bewegung in der Höhe ist ausgeschlossen.

Alle herkömmlichen Fußbodenpaneele der obigen Art, zu denen neben den Paneelen, die in den beiden genannten Druckschriften beschrieben werden, zahlreiche weitere Ausführungsformen gehören, bestehen aus Holzwerkstoffen, in den letzten Jahren überwiegend aus MDF oder HDF. Holzwerkstoffe sind brennbar. Die herkömmlichen Paneele gehören daher einer Bauteilklasse an, die ihre Verwendung in vielen Gebäuden, z. B. vielen öffentlichen Gebäuden ausschließt. Holzwerkstoffe haben in der Regel eine Reihe von weiteren Nachteilen. Sie sind zumeist nicht formaldehydfrei. Angesichts ihres relativ geringen Gewichtes sind sie hinsichtlich Luftschallschutz und Trittschallschutz ungünstig. Dies gilt trotz zahlreicher Versuche der Hersteller, die Schalleigenschaften durch untergelegte oder untergeklebte Dämmmatten zu verbessern.

Holzwerkstoffe sind im übrigen nur begrenzt resistent gegen Feuchtigkeit, da sie in der Regel dazu neigen, unter Feuchtigkeitseinfluss aufzuquellen und sich entsprechend zu verformen.

EP 1 520 947 A1 offenbart Paneele die aus Stein bestehen und Kupplungselemente aufweisen. Die Kupplungselemente sind so beschaffen dass zwei Paneele sowohl senkrecht zur gemeinsamen Fuge und zugleich parallel zur Oberfläche als auch senkrecht zur gemeinsamen Oberfläche durch Formschluss verbunden werden können.

DE 79 04 458 U1 offenbart eine Platte zur Herstellung eines Trockenestrichs. Die Estrichplatte ist ein monolitische Gipsplatte mit faserförmiger Armierungsanlage und trägt auf ihrem Umfang Ausnehmungen die für Fremdverbindungsmittel vorgesehen sind. Die Sichtseite der monolitischen Estrichplatte kann mit einer PVC-Beschichtung in einem bestimmten Muster beklebt sein.

WO 2005/031084 offenbart Kunststeinfliesen die trocken installiert werden. Die Fliesen sind an zwei gegenüberliegenden Kantern mit Nut und Federverbindungen vorgesehen welche einstückig aus dem Material des Fliesens ausgebildet sind.

Der Erfindung liegt die Aufgabe zugrunde, einen Fußbodenbelag aus Fußbodenpaneelen der eingangs genannten Art zu schaffen, der insbesondere hinsichtlich des Brandschutzes verbesserte Eigenschaften aufweist und daher in Anwendungsfällen einsetzbar ist, die den bisher verwendeten, aus Holzwerkstoffen bestehenden Paneelen verschlossen waren.

Zur Lösung dieser Aufgabe ist der erfindungsgemäße Fußbodenbelag dadurch gekennzeichnet, dass der Kern aus einem mineralischen Material besteht, dass das mineralische Material Gesteinsmehl ist in Verbindung Bindemitteln, dass die Verriegelungsmittel einstückig aus dem Material des Kerns ausgebildet sind und modifizierte Nut und Federverbindungen umfassen, die neben dem Eingriff von Nut und Feder eine formschlüssige Verbindung benachbarter Paneele in Richtung senkrecht zur Verbindungslinie sowie parallel zur Verbindungslinie benachbarter

Paneele gewährleisten, wobei die Deckschicht aus PVC besteht. Ein mineralisches Material ist unbrennbar und eignet sich daher zur Lösung der gestellten Aufgabe. Das mineralische Material ist Gesteinsmehl, in Verbindung Bindemitteln. Vorzugsweise wird in das mineralische Material ein ArmierungsMaterial eingemischt, das einen Anteil von 5 bis 25%, bezogen auf das Volumen, aufweisen kann.

Das Armierungsmaterial kann aus Altpapier gewonnen werden, dessen Zellstofffasern als Armierungsmaterial ausreichen. Alternativ oder in Kombination können Textilfasern, Glasfasern, Kohlenstofffasern zur Armierung des mineralischen Materials verwendet werden,

Angesichts der Verwendung des mineralischen Materials für die Herstellung des Kerns beträgt dessen Dichte vorzugsweise mehr als 1,000 kg/m³.

Diese hohe Dichte wirkt sich vorteilhaft hinsichtlich des Trittschallschutzes aus, und auch der Luftschallschutz wird verbessert. Die Wärmeleitfähigkeit und auch die Fähigkeit zur Wärmespeicherung ist gegenüber Holzwerkstoffplatten verbessert, so dass die erfindungsgemäßen Paneele vorteilhaft in Verbindung mit Fußbodenheizungen eingesetzt werden können.

Für die Art der Verriegelungsmittel zwischen benachbarten Fußbodenpaneelen gibt es auf dem Markt zahlreiche geeignete Vorbilder, von denen viele auf den in den beiden oben genannten Druckschriften beschriebenen Lösungen basieren. Im Kern handelt es sich bei diesen Verriegelungsmitteln um Nut-Feder-Verbindungen, die so modifiziert sind, dass sie ein Auseinanderdriften oder ein sich Verschieben benachbarter Paneele im obigen Sinn durch Formschluss ausschließen. Zumeist befindet sich an Nut und/oder Feder ein Vorsprung und am Gegenstück eine Ausnehmung, die ineinander greifen. Die Herstellung der Verbindung kann erfolgen durch Zusammenrasten im Sinn einer Klickverbindung oder auch durch Einwinkeln der benachbarten Teile in Bezug aufeinander, wie es bereits in der GB 2 256 023 aus dem Jahre 1991 beschrieben wird. Eine Klickverbindung erfordert eine geringfügige Elastizität des Materials des Kerns, die bei den meisten in Betracht kommenden Kern Materialien ausreichend vorhanden ist. Dies gilt auch für das gemäß der vorliegenden Erfindung verwendete mineralische Material. Durch Einbettung geeigneter Füllstoffe kann die Elastizität des Materials erhöht werden.

Die Verriegelung kann derart erfolgen, dass benachbarte Paneele mit gewisser elastischer Vorspannung zusammengezogen werden. Dadurch wird eine dichte Verbindung zwischen den benachbarten Paneelen erreicht, die allerdings nicht flüssigkeitsdicht sein kann, so dass bei herkömmlichen Paneelen, die eine gewisse Feuchtigkeitsresistenz haben sollen, eine Kantenimprägnierung erforderlich ist oder sogar darüber hinausgehende Maßnahmen. Auf der anderen Seite kann es aber auch zweckmäßig sein, zwischen benachbarten Paneelen ein gewisses Spiel zuzulassen, wie es die eingangs genannte EP 698 162 B1 beschreibt.

Die Verriegelungsmittel sind im übrigen einstückig aus dem Kernmaterial gebildet werden, wie es die eingangs genannte EP 843 763 B1 vorgibt..

Auf dem Kern einer erfindungsgemäßen Platte befindet sich in fest integrierter Form die Deckschicht, die auch als Nutzschicht bezeichnet werden kann. Kern und Deckschicht bilden eine zusammenhängende, für den Gebrauch bzw. das Verlegen fertige Einheit, die keine Nachbehandlung erfordert.

Das verwendete Material des Deckschichts kann auf Rutschsicherheit ausgelegt sein. In jedem Fall bildet der plattenförmige Kern mit dieser als Nutzschicht verwendbaren Deckschicht eine Einheit, die als Einheit verlegt wird.

Die Deckschicht kann insbesondere so ausgelegt werden, dass sie schalldämpfend wirkt oder den Gehkomfort erhöht.

Auf der Rückseite des Kerns kann sich eine zusätzliche Dämmschicht zur Dämpfung von Körperschall oder Trittschall befinden. Alternativ können sich auf der Unterseite der den Kern bildenden Paneele Kanäle für die Aufnahme von Leitungen befinden. Heizungs- und/oder Kühlelemente können in den Kern eingebettet sein.

Die erfindungsgemäßen Fußbodenpaneele können Eigenschaften zur Ableitung elektrostatischer Aufladungen aufweisen. In Betracht kommt beispielsweise eine elektrisch leitende Schicht zwischen dem Kern und der Deckschicht. In den Kern selbst können elektrisch leitende Elemente eingebettet sein. Schließlich kann auch die Deckschicht elektrisch leitend ausgebildet sein.

Zwischen benachbarten Paneelen können durch geeignete Dimensionierung Fugen gebildet werden, in die ein Fugenband oder ein Fugenmaterial unter dekorativen Aspekten eingefügt werden kann. Die Fugen können jedoch auch verschiedene Aufgaben wahrnehmen. So können sie beispielsweise ein Material zur Absorption von Oberflächenfeuchtigkeit oder Oberflächenwasser enthalten. Das Fugenmaterial kann gegebenenfalls durch Quellung die Fuge dicht verschließen.

Alternativ kann das Fugenmaterial elektrostatische Aufladungen ableiten. beispielsweise in Richtung des Rohbodens oder auch gegen einen installierten Erdleiter.

Die Fugen können auch zur Aufnahme einer elastischen, plastischen oder aushärtenden Fugenmasse dienen. Weiterhin können die Fugen einen Spannungsausgleich in Bezug auf die sich bewegenden Gebäudemassen gestatten. In Betracht kommen hier mehrere kleine Mikrofugen mit 0,1 bis 0,5 mm Breite. Das Spiel, dass diese Mikrofugen ermöglichen, kann sich über eine größere Fläche zu Werten von beispielsweise 3 bis 6 mm addieren.

In die Fugen könnte auch ein Installationskanal integriert werden.

Fugenbänder können an einem der benachbarten Paneele befestigt sein oder auch in die Fuge eingelegt werden.

Im Folgenden werden bevorzugte Ausführungsbeispiele der Erfindung anhand der beigefügten Zeichnung näher erläutert.
Fig. 1 : ist ein senkrechter Teilschnitt durch ein erfindungsgemäßes Fußbodenpaneel;
Fig. 2 : veranschaulicht in einem senkrechten Teilschnitt einen speziellen Aspekt eines derartigen Paneels;
Fig. 3 : ist ein Teilschnitt zur Veranschaulichung der Gestaltung einer Fuge; und
Fig. 4 : veranschaulicht eine Ausführungsform mit dämpfender Unterlage.

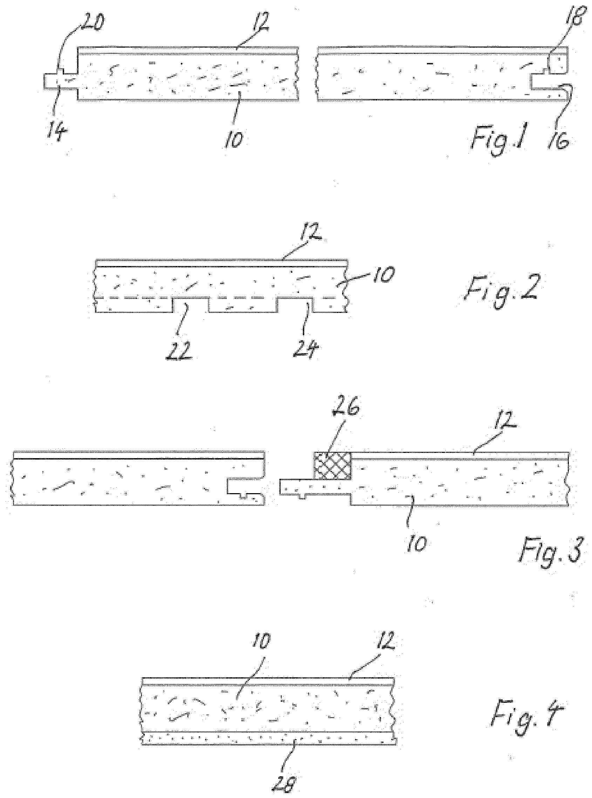

In Fig. 1 ist ein erfindungsgemäßes Fußbodenpaneel dargestellt. Es setzt sich zusammen aus einem Kern 10 in der Form einer Trägerplatte und einer auf diesen angebrachten Deckschicht 12, die zugleich Dekor- und Nutzschicht ist. Der Kern 10 besteht aus einem mineralischen Material, das unter hohem Druck kalt verpresst wird. Ein zusätzliches Bindemittel ist zugesetzt. Das Material kann auch eine Armierung erhalten, etwa eine Armierung aus Zellstofffasern, die aus Altpapier gewonnen sind.

Der Kern 10 besteht aus mineralischen Materialien. Die Trägerplatte gemäß Fig. 1 weist auf der linken Seite an der dortigen Kante eine vorspringende Feder 14 und auf der rechten Seite an der dortigen Kante eine Nut 16 auf. Nut und Feder verlaufen über die gesamte Länge der entsprechenden Kanten. Es ist davon auszugehen, dass Fig. 1 eine rechteckige oder quadratische Platte zeigt.

Es ist erkennbar, dass Nut und Feder 14, 16 insoweit modifiziert sind, als sich in der oberen Wange der Nut 16 eine Vertiefung 18 befindet, in die ein Vorsprung 20 auf der Oberseite der Feder 14 eintritt.

Die entsprechende Verrastung erfordert eine gewisse Elastizität der zusammenwirkenden Teile im Bereich von Nut und Feder. Bei Verfahren, die im vorliegenden Zusammenhang auch als "Einwinkeln" bezeichnet werden, sind die Anforderungen an die Elastizität des Materials wesentlich geringer.

Das erfindungsgemäß verwendete mineralische Material kann neben den Armierungsmaterialien auch sonstige Füllstoffe zur Verringerung des Gewichts, zur Erhöhung der Festigkeit, usw., enthalten.

Fig. 2 deutet einen Aspekt an, der bereits kurz angesprochen wurde. An der Unterseite des Kerns 10 können Kanäle 22, 24 ausgebildet sein, die in den Kern in der Form eines Kreuzrasters eingearbeitet sind und die Verlegung von Leitungen, insbesondere elektrische Leitungen, Heizungsleitungen, Druckluftleitungen, usw., gestatten.

Fig. 3 zeigt eine Ausführungsform, bei der zwischen zwei zusammengesetzten Fußbodenpaneelen eine Dichtleiste 26 vorgesehen ist. Die Dichtleiste 26 kann dekorativen oder funktionalen Zwecken dienen, wie zuvor angegeben wurde. Bei dem dargestellten Beispiel ist sie beispielsweise mit dem rechten der beiden Teile verbunden. Sie kann auch lose eingelegt werden.

Fig. 4 zeigt in einem weiteren senkrechten Schnitt eine Ausführungsform eines erfindungsgemäßen Fußbodenpaneels, das an der Unterseite des Kerns 10 eine Dämmschicht 28 aus einem Schaummaterial oder dergleichen aufweist, die zur weiteren Trittschalldämpfung und gegebenenfalls auch zur thermischen Dämpfung dient.

## Patentansprüche

1. Fußbodenbelag aus Fußbodenpaneelen mit einem plattenförmigen Kern (10) und einer oberen Deckschicht (12) die aus PVC besteht, mit mechanischen Verriegelungsmitteln (14, 16, 18, 20) wenigstens an zwei einander gegenüberliegenden Kanten der Fußbodenpaneele, wobei der Kern aus einem mineralischen Material besteht, **dadurch gekennzeichnet dass** das mineralische Material Gesteinsmehl ist in Verbindung Bindemitteln, dass die Verriegelungsmittel einstückig aus dem Material des Kerns (10) ausgebildet sind und modifizierte Nut und Federverbindungen umfassen, die neben dem Eingriff von Nut und Feder eine formschlüssige Verbindung benachbarter Paneele in Richtung senkrecht zur Verbindungslinie sowie parallel zur Verbindungslinie benachbarter Paneele gewährleisten.

2. Fußbodenbelag nach Anspruch 1, **dadurch gekennzeichnet, dass** benachbarte Fußbodenpaneele durch die Verriegelungsmittel mit Vorspannung zusammengespannt sind.

3. Fußbodenbelag nach Anspruch 1 oder 2, **dadurch gekennzeichnet, dass** in den Kern ein Armierungsmaterial eingebettet ist.

4. Fußbodenbelag nach einem vorhergehenden der Ansprüche, **dadurch gekennzeichnet, dass** das Fußbodenpaneel rechteckig ist.

5. Fußbodenbelag nach Anspruch 4, **dadurch gekennzeichnet, dass** das Fußbodenpaneel an beiden einander gegenüberliegenden Kantenpaaren Verriegelungsmittel aufweist.

6. Fußbodenbelag nach einem vorhergehenden der Ansprüche, **dadurch gekennzeichnet, dass** das Fußbodenpaneel an der Unterseite des Kerns (10) eine Dämmschicht (28) aus einem Schaummaterial aufweist.

7. Fußbodenbelag nach einem der vorhergehenden der Ansprüche, **dadurch gekennzeichnet, dass** die Dichte des Kerns mehr als 1.000 kg/m³ beträgt.

8. Fußbodenbelag nach einem der vorhergehenden der Ansprüche, **dadurch gekennzeichnet, dass** sich an Nut und/oder Feder ein Vorsprung und am Gegenstück eine Ausnehmung befindet, die ineinander greifen.

9. Fußbodenbelag nach Anspruch 8, **dadurch gekennzeichnet, dass** der Verbindung der Verriegelungsmitteln durch Einwinkeln der benachbarten Teile in bezug aufeinander erfolgt.

10. Fußbodenbelag nach Anspruch 8 oder 9, **dadurch gekennzeichnet dass**, sich in der unteren Wange der Nut (16) eine Vertiefung (18) befindet, in die ein Vorsprung (20) auf der Unterseite der Feder (14) eintritt.

## Claims

1. Floor covering made up of floor panels with a plate-shaped core (10) and an upper cover layer (12), which is made of PVC, with mechanical locking means (14, 16, 18, 20) at least on two mutually opposite edges of the floor panels, wherein the core consists of a mineral material, **characterized in that** the mineral material is rock flour in connection with binders, that the locking means are formed integrally from the material of the core (10) and comprise modified tongue and groove connections which, in addition to the engagement of groove and tongue, ensure a form-fitting connection of adjacent panels in a direction perpendicular to the connection line and parallel to the connection line of adjacent panels.

2. Floor covering according to claim 1, **characterized in that** adjacent floor panels are clamped together by the locking means with a pretension.

3. Floor covering according to claim 1 or 2, **characterized in that** a reinforcement material is embedded in the core.

4. Floor covering according to one of the preceding claims, **characterized in that** the floor panel is rectangular.

5. Floor covering according to Claim 4, **characterized in that** the floor panel has locking means on both mutually opposite edge pairs.

6. Floor covering according to one of the preceding claims, **characterized in that** the floor panel has, on the underside of the core (10), an insulating layer (28) composed of a foam material.

7. Floor covering according to one of the preceding claims, **characterized in that** the density of the core is higher than 1000 kg/m³.

8. Floor covering according to one of the preceding claims, **characterized in that** a projection is situated on the groove and/or tongue, and a recess is situated on the mating piece, said projection and recess interengaging.

9. Floor covering according to claim 8, **characterized in that** the connection of the locking means takes place by angling in the adjacent parts with respect to one another.

10. Floor covering according to claim 8 or 9, **characterized in that** a recess is situated in the lower cheek of the groove (16), in which a projection (20) on the underside of the tongue (14) enters.

## Revendications

1. Revêtement de sol constitué de panneaux de sol comprenant une partie centrale en forme de plaque (10) et une couche supérieure de recouvrement (12) qui est en PVC, comprenant des moyens de verrouillage mécaniques (14, 16, 18, 20) au moins à deux bords opposés l'un à l'autre des panneaux de sol, la partie centrale étant constituée d'une matière minérale **caractérisé en ce que** la matière minérale est de la poudre de roche en liaison avec des agents liants, **en ce que** les moyens de verrouillage sont réalisés en une seule pièce à partir de la matière de la partie centrale (10) et comprennent des liaisons du type à rainures et à languettes modifiées qui, outre l'entrée en prise de rainures et de languettes, assurent une liaison par complémentarité de forme de panneaux voisins dans une direction perpendiculaire à la ligne de liaison, ainsi que de panneaux voisins parallèlement à la ligne de liaison.

2. Revêtement de sol selon la revendication 1, **caractérisé en ce que** des panneaux de sol voisins sont serrés l'un contre l'autre via les moyens de verrouillage avec une précontrainte.

3. Revêtement de sol selon la revendication 1 ou 2, **caractérisé en ce qu'**une matière faisant office d'armature est incorporée dans la partie centrale.

4. Revêtement de sol selon l'une quelconque des revendications précédentes, **caractérisé en ce que** le panneau de sol est rectangulaire.

5. Revêtement de sol selon la revendication 4, **caractérisé en ce que** le panneau de sol présente des moyens de verrouillage aux deux paires de bords opposées l'une à l'autre.

6. Revêtement de sol selon l'une quelconque des revendications précédentes, **caractérisé en ce que** le panneau de sol présente, au niveau de la face inférieure de la partie centrale (10), une couche d'isolation (28) constituée d'une matière en mousse.

7. Revêtement de sol selon l'une quelconque des revendications précédentes, **caractérisé en ce que** la masse volumique de la partie centrale est supérieure à 1.000 kg/m³.

8. Revêtement de sol selon l'une quelconque des revendications précédentes, **caractérisé en ce qu'**un appendice en saillie se trouve au niveau de la rainure et/ou de la languette, ainsi qu'une cavité au niveau de la pièce complémentaire, qui viennent se mettre en prise par emboîtement.

9. Revêtement de sol selon la revendication 8, **caractérisé en ce que** la liaison des moyens de verrouillage a lieu par rotation des pièces adjacentes les unes par rapport aux autres.

10. Revêtement de sol selon la revendication 8 ou 9, **caractérisé en ce qu'**un renfoncement (18) est situé dans la joue inférieure de la rainure (16), dans lequel pénètre un appendice en saillie (20) sur le côté inférieur de la languette (14).
